# EUROPÄISCHE PATENTSCHRIFT

(11) **EP 0 397 168 B1**
(45) Veröffentlichungstag und Bekanntmachung des Hinweises auf die Patenterteilung: **08.12.1993**
(21) Anmeldenummer: 90108810.4
(22) Anmeldetag: 10.05.1990
(51) Int. Cl.: F17C 3/08, B29C 67/14

(54) **Kryostat**
Cryostat
Cryostat

(30) Priorität: 12.05.1989 DE 3915578
(43) Veröffentlichungstag der Anmeldung: 14.11.1990
(73) Patentinhaber: SPECTROSPIN AG, CH-8117 Fällanden (CH)
(72) Erfinder: Mraz, Beat, CH-8634 Hombrechtikon (CH)
(74) Vertreter: KOHLER SCHMID + PARTNER

(56) Entgegenhaltungen:
- EP-A- 0 304 596
- FR-A- 1 472 691
- FR-A- 2 344 392
- US-A- 3 328 229
- US-A- 4 483 904

## Beschreibung

Die Erfindung betrifft einen Kryostat, insbesondere für supraleitende Magnete, mit ineinandergeschachtelten Bauteilen, von denen eines eine äußere Hülle und mindestens ein anderes ein in der Hülle angeordnetes Gefäß zur Aufnahme eines Kühlmittels bildet, und mit die Bauteile verbindenden Zugstäben, mit denen jeweils ein inneres Bauteil an dem benachbarten, weiter außen liegenden Bauteil aufgehängt ist, welche Zugstäbe als runde, mit Glasfasern oder Aramidfasern verstärkte Kunststoffstäbe ausgebildet sind, an ihren beiden Enden Zuganker aufweisen und über die Zuganker an dem jeweiligen Bauteil befestigt sind, wobei die Enden der Zugstäbe von Glasfasern oder Aramidfasern gebildet werden und die Enden in einer sich erweiternden Bohrung im Zuganker festgelegt sind. Die Erfindung betrifft außerdem ein Verfahren zur Herstellung derartiger Zugmittel.

Bei Kryostaten für supraleitende Magnete, die allgemein den vorstehend beschriebenen Aufbau haben, bereitet die Ausbildung der Zugmittel, die in der Regel als Zugstäbe ausgebildet sind, besondere Probleme. Diese Zugstäbe müssen eine hohe Zugfestigkeit haben, um die relativ großen Massen sicher zu tragen, und zugleich eine geringe Wärmeleitfähigkeit aufweisen, um den Wärmetransport in das Innere eines Kryostaten möglichst klein zu halten. Sie sollen zugleich einfach zu fertigen und zu montieren sein und im Kryostaten möglichst wenig Platz einnehmen, da die zu ihrer Unterbringung erforderlichen Räume erheblich zum Bauvolumen eines solchen Kryostaten beitragen können.

Es sind Kunststoffstäbe bekannt, Z.B. aus WO-8604016 (PCT/GB 86/000 14), die mit direktionalen Glasfasern verstärkt sind. Diese Zugstäbe weisen den Vorteil auf, daß sie die erforderliche Zugfestigkeit besitzen, ohne im Kryostaten übermäßig viel Platz in Anspruch zu nehmen. An ihren Enden sind diese Zugstäbe mit Zuganker versehen, über die die Kräfte eingeleitet werden. Eine innige Verbindung zwischen dem Zugstab und dem Zuganker wird dadurch erreicht, daß am Ende des Kunststoffstabes die Glasfasern zu einer Schlaufe ausgebildet sind, und die Schlaufe am Ende des Kunststoffstabes übersteht. Der Zuganker weist eine sich konisch erweiternde Bohrung auf, in die das Ende des Zugstabes derart ein- und hindurchgeführt wird, daß die Glasfaserschlaufe das erweiterte Ende überragt. In die überstehende Schlaufe wird nun ein Keil eingesetzt die Glasfasern mit dem Keil in die sich in Zugrichtung verjüngende Bohrung eingezogen und schließlich die Glasfasern in dieser Lage ausgehärtet.

Diese hochfeste Verbindung von Zuganker und Zugstab weist aber den Nachteil auf, daß die Enden der Zugstäbe mit Schlaufen aus Glasfasern versehen sein müssen, was zum einen kostenintensiv, zum anderen aufwendig ist, da eine Vielzahl von Zugstäben mit unterschiedlichen Längen in einem Kryostaten Einsatz finden und für jede Länge ein Zugstab mit Schlaufen an seinen Enden hergestellt werden muß. Aufgrund der unterschiedlichen Materialien von Zuganker, Keil- und Kunststoffstab besteht ein weiterer Nachteil darin, daß wegen deren unterschiedlichen Ausdehnungskoeffizienten keine gute Oberflächenverbindung zwischen dem Zugstab und dem Zuganker hergestellt werden kann. Die Bruchsicherheit dieser Verbindung ist daher begrenzt.

Demgemäß liegt der Erfindung die Aufgabe zugrunde, Zugmittel für Kryostaten zu schaffen, die auf einfache und kostengünstige Weise unter Einhaltung enger Toleranzen herstellbar sind, einen geringen Platzbedarf haben und zugleich eine höhere Bruchsicherheit aufweisen.

Diese Aufgabe wird nach der erfindungsgemäßen Vorrichtung dadurch gelöst, daß die die Enden der Zugstäbe bildenden Glasfasern oder Aramidfasern an den Zugstabenden enden und aufgefächert in der Bohrung des Zugankers festgelegt sind, wobei ein jedes Faserende mit einem Klebstoff umgeben ist und daß die Bohrung des Zugankers über einen ersten Bereich zylindrisch und über den restlichen Bereich sich konisch erweiternal verläuft.

Gemäß der Erfindung werden die Zugmittel mit Zuganker versehen, wobei die Zuganker eine sich erweiternde Bohrung aufweisen. Die Enden der Zugmittel, die von direktionalen Glasfasern gebildet werden, sind aufgefächert bzw. gespreizt, so daß das Ende der Zugmittel eine größere Querschnittsfläche als der restliche Körper des Zugmittels aufweist, und sind die Enden mit einem Klebstoff versehen, der jede einzelne Glasfaser umgibt und einhüllt. Das Zugmittel ist schließlich derart im Zuganker angeordnet, daß es dessen Bohrung durchgreift und das von den aufgefächerten und mit dem Klebstoff getränkte Ende der Glasfasern sich in dem erweiterten Ende der Bohrung befindet. Nach dem Aushärten des Klebstoffes können aufgrund der großflächigen und direkten Verbindung des Klebstoffes mit den Glasfaserenden sehr hohe Zugkräfte über den Zuganker auf die Zugmittel eingeleitet werden. Bei dieser Belastung wird der Klebstoff auf Scherung und Druck belastet, so daß der Klebstoff zwischen den Fasern eingeklemmt wird, da die Zugrichtung des Zugmittels in Richtung des sich verjüngenden Endes der Bohrung des Zugankers erfolgt, und somit eine Verdrängung des Klebstoffs bewirkt wird. Selbst bei einer beschädigten Verbindung von Zuganker und Zugmittel kann diese noch Kräfte übertragen, da der Verdrängung des Klebstoffes aus dem Raum zwischen den Fasern der Selbsthemmungseffekt entgegenwirkt. Diese Verbindung überträgt also auch noch nach dem Überschreiten der durch Lastspitzen hervorgerufenen Bruchdehnung Zugkräfte mit Sicherheit. Vorteilhaft besteht der Zuganker aus Kunststoff und ist mit direktionalen oder bidirektionalen Glasfasern verstärkt.

Als besonders vorteilhaft hat sich eine Form der Glasfasern enthaltenden Zugmittel erwiesen, bei der diese als runde mit direktionalen Glasfasern verstärkte Kunststoffstäbe ausgebildet sind. Derartige glasfaserverstärkte Kunststoffstäbe sind als Massenware erhältlich, die nur noch auf die gewünschte Länge zugeschnitten werden müssen, und bei denen lediglich die Enden von dem die Glasfasern umgebenden Harz befreit werden müssen, so daß die Glasfasern nach dem Einführen des Kunststoffstabes in die Bohrung des Zugankers aufgefächert und mit einem Klebstoff versehen werden können. Bevorzugt weist das engere Ende der Bohrung einen dem Querschnitt des Kunststoffstabs entsprechenden Querschnitt auf.

Bei einer anderen vorteilhaften Ausführung ist vorgesehen, daß die Zugmittel als Kevlar-Kordeln ausgebildet sind. Auch diese Kevlar-Kordeln, bestehend aus Aramidfasern, können sehr hohe Zugkräfte übertragen und weisen den Vorteil auf, daß sie für die Herstellung der Verbindung mit dem Zuganker keiner Vorbehandlung bedürfen. Die Kevlar-Kordel wird lediglich über das engere Ende der Bohrung des Zugankers in diesen soweit eingeführt, daß sie das erweiterte Ende überragt. Nach dem Auffächern der überragenden Enden der Aramidfasern und dem Zusatz von Klebstoff wird das überragende Ende in die bohrung des Zugankers wieder eingezogen, so daß in dieser Lage der Klebstoff aushärten kann.

Wie bereits erwähnt, muß die von den Zugmitteln übertragene Wärmemenge möglichst klein gehalten werden. Für die Wärmeübertragung ist nicht nur die Wärmeleitfähigkeit des Zugmittels selbst von Bedeutung, sondern auch die Wärmeübertragung von den Bauteilen, an denen das Zugmittel befestigt ist, auf die Zug mittel. Dabei haben die in dem erfindungsgemäßen Kryostaten verwendeten Zugmittel den Vorteil, daß wegen der geringen Dicke der Zugmittel die Kontaktfläche zwischen den Zugmitteln und den daran befestigten Zugankern relativ klein ist, so daß der Wärmeübergang durch Wärmeleitung verhältnismäßig klein ist. Trotz der geringen Dicke besitzen die Zugmittel vorteilhaft eine ausreichende Zugfestigkeit.

Bevorzugt ist der Zuganker mit einer sich zu einer Bohrungsöffnung hin konisch erweiternden Bohrung versehen. Eine andere vorteilhafte Ausführungsform sieht vor, daß die Bohrung des Zugankers über einen ersten Bereich zylindrisch und über den restlichen Bereich sich konisch erweiternd verläuft. Der zylindrische Bereich der Bohrung kann dem Querschnitt des Zugmittels angepaßt sein, wohingegen der konisch sich erweiternde Bereich derart ausgebildet ist, daß dieser die aufgefächerten Enden der direktionalen Glasfasern die in Klebstoff eingebettet sind, vollständig aufnimmt. Bevorzugt kann auch der an das aufgefächerte Ende sich anschließende, im zylindrischen Bereich der Bohrung des Zugankers sich befindende Abschnitt des Zugmittels in diesen zylindrischen Bereich eingeklebt sein. Bei einer Zugbelastung des Zugmittels treten demnach im zylindrischen Bereich Scherkräfte zwischen dem Zugmittel und dem Zuganker und im konisch sich erweiternden Bereich der Bohrung Druck- und Scherkräfte auf. Dies hat den Vorteil, daß, da die Verbindung nicht auf reine Scherung beansprucht wird, wesentlich höhere Belastungen übertragen werden können.

Bei einer anderen Ausbildung ist vorgesehen, daß der Zuganker mit einer sich stufenförmig erweiternden Bohrung versehen ist. Diese Bohrung ist ebenfalls einfach herzustellen und kann mit einer dem Einsatzzweck entsprechenden Anzahl von Stufen versehen werden.

Bei einem bevorzugten Beispiel eines Zugankers ist dieser zylinderförmig ausgebildet, verläuft die Bohrung koaxial und ist seine Außenseite mit einem Außengewinde versehen. Dieser Zuganker überträgt die auf ihn eingeleiteten Kräfte gleichmäßig auf den in der koaxialen Bohrung festgelegten Zugstab. Weiterhin weist dieser Zuganker den Vorteil auf, da er in einer Gewindebohrung festgelegt wird, daß über die Einschraubtiefe des Zugankers einfach die Lage des zu befestigenden Bauteils eingestellt werden kann. Eine Handhabung des Zugankers wird über eine Werkzeugangriffsfläche erreicht, die an seiner Außenseite vorgesehen ist. An dieser Werkzeugangriffsfläche kann z.B. ein Gabelschlüssel angesetzt werden, über den der bolzenartig ausgebildete Zuganker in ein Sackloch eingeschraubt wird.

Ein anderer Zuganker ist vorteilhaft mehrteilig ausgebildet, wobei der Zuganker eine das Zugmittel umgebende Innenhülse und eine die Innenhülse umgebende und sich an dieser axial abstützende Außenhülse aufweist. Bei diesem Zuganker wird das Ende des Zugmittels mit der Innenhülse verbunden, wohingegen die Außenhülse als freibewegliches Bauteil ausgebildet ist, und demnach relativ zur Innenhülse Drehbewegungen ausführen kann, diese jedoch axial abstützt. Beim Festlegen der Außenhülse an dem zu haltenden Bauteil, z.B. durch Einschrauben, werden somit die Schraubbewegungen der Außenhülse nicht auf die Innenhülse und somit auch nicht auf den Zugstab übertragen, wodurch schädigende Torsionsbeanspruchungen vermieden werden. Axiale Kräfte werden jedoch über die Abstützung und die Innenhülse auf das Zugmittel eingeleitet.

Die axiale Abstützung von Außen- und Innenhülse wird vorteilhaft dadurch erreicht, daß die Innenhülse an ihrem dem freien Ende des Zugmittels zugewandten Ende einen radial sich erweiternden Absatz und die Außenhülse einen den Absatz hintergreifenden, sich radial nach innen erstreckenden Vorsprung aufweist.

Bevorzugt besteht die Innenhülse aus Kunststoff, insbesondere dem die Glasfasern einbettenden Kunststoff des Zugstabes, und die Außenhülse aus Metall, insbesondere Messing. Hierdurch wird eine stabile Befestigung des Zugankers z.B. in einer Gewindebohrung ermöglicht und eine hochfeste Oberflächenverbindung von Innenhülse und Zugstabgewährt, da deren Materialien den gleichen Ausdehnungskoeffizienten aufweisen. Weiterhin ist der Klebstoff vorteilhaft ein Epoxidklebstoff.

Die oben genannte Aufgabe wird nach dem erfindungsgemäßen Verfahren dadurch gelöst, daß die Glasfaserenden an den Enden der Zugmittel von Kunststoff befreit werden, diese Glasfaserenden in die Bohrung des Zugankers soweit eingeführt werden, daß sie über dessen erweitertes Ende hinausragen, daß die Glasfaserenden aufgefächert und mit Klebstoff versehen, wieder in die Bohrung eingezogen und in dieser ausgehärtet werden.

Dieses Verfahren sieht vor, daß bei glasfaserverstärkten Kunst3stoffstäben an den Enden die Glasfasern freigelegt werden, so daß diese nach dem Einführen in die Bohrung der Zuganker aufgefächert werden können, wobei sich der Durchmesser des Glasfaserbündels vergrößert, und die Glasfaserenden nach dem Auffächern mit einem Klebstoff versehen werden und schließlich soweit in den Zuganker wieder eingezogen werden, daß sie in der sich erweiternden Bohrung zu liegen kommen. In dieser Lage härtet nun der Klebstoff aus und verbindet die Glasfaserenden zu einem Pfropf, der sicher in der in Zugrichtung sich verengenden Bohrung des Zugankers liegt.

Bei Kevlar-Kordeln müssen die Glasfasern nach dem Durchtritt durch die Bohrung des Zugankers lediglich aufgefächert, mit Klebstoff versehen und in die Bohrung wieder eingezogen werden. Es erübrigt sich hier die vorherige Säuberung der Glasfaserenden von anhaftendem Kunststoff.

Bevorzugt können die aufgefächerten Glasfaserenden zusätzlich noch textoriert, gestaucht oder dgl. verformt werden. Durch diese zusätzliche Verformung der Glasfaserenden wird ein späteres Herausziehen dieser aus dem in der Bohrung des Zugankers festliegenden Pfropf zusätzlich verhindert.

Weitere Vorteile, Merkmale und Einzelheiten ergeben sich aus der nachfolgenden Beschreibung, in der unter Bezugnahme auf die Zeichnung, Ausführungsbeispiele im einzelnen erläutert sind. Dabei zeigen:
- Fig.1: teilweise in Seitenansicht und teilweise im Schnitt einen nach der Erfindung ausgebildeten Kryostaten in schematischer Darstellung;
- Fig.2: einen Abschnitt des Kryostaten nach Fig.1 in vergrößertem Maßstab;
- Fig.3: einen Querschnitt durch eine Ausführungsform einer Anschlußstelle eines Zugstabs in nochmal vergrößertem Maßstab;
- Fig.4 + 5: einen Querschnitt durch beispielhafte Ausführungen eines Zugankers; und
- Fig.6 a-d: in schematischer Darstellung vier Arbeitsschritte bei der Herstellung der Verbindung eines Zugstabs mit einem Zuganker.

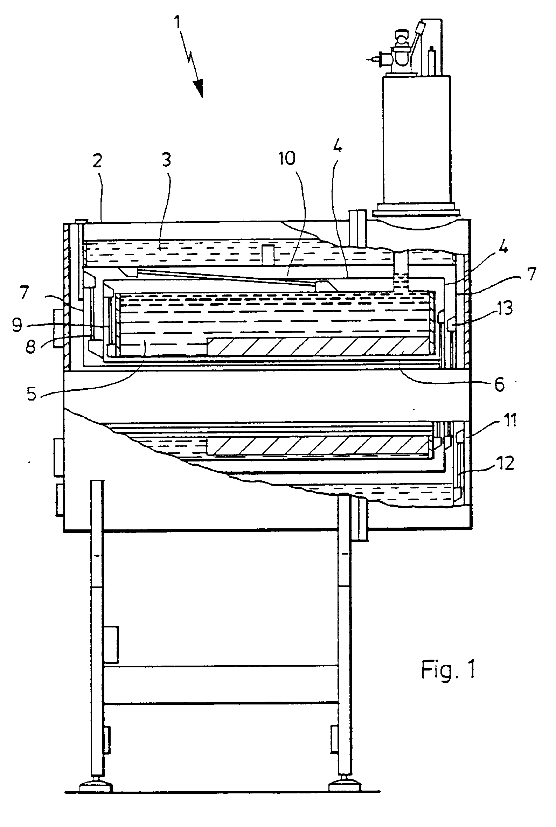

Der in Fig.1 dargestellte Kryostat 1 weist innerhalb eines Mantels 2 von außen nach innen gesehen einen Stickstofftank 3, einen Schild 4 und einen Heliumtank 5 auf, der einen supraleitenden Magnet 6 enthält. Der Schild 4 ist an den Stirnseiten 7 des Stickstofftankes 3 mittels Zugstäben 8 befestigt, wie auch der Heliumtank 5 an dem Schild 4 mittels Zugstäben 9 befestigt ist. Ferner ist der Heliumtank 5 mit dem Stickstofftank 3 durch wenigstens einen sich axial erstreckenden Zugstab 10 verbunden. Schließlich ist auch der Stickstofftank 3 an den Stirnflächen 11 des Mantels 2 durch Zugstäbe 12 befestigt. Die Zugstäbe 8, 9, 10, und 12 weisen an ihren Enden jeweils eine Anschlußstelle 13 auf, über die sie an dem zu befestigenden Bauteil festgelegt sind.

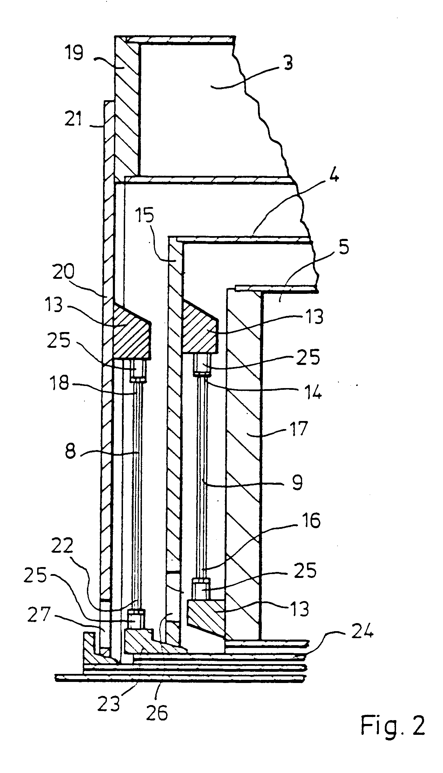

Wie aus Fig.2 ersichtlich, ist der den Heliumtank 5 mit dem Schild 4 verbindende Zugstab 9 mit seinem oberen Ende 14 über die Anschlußstelle 13 an der Innenseite der Stirnwand 15 des Strahlungsschildes 4 befestigt. Ebenso ist das untere Ende 16 des Zugstabes 9 über eine Anschlußstelle 13 an der Außenseite der Stirnwand 17 des Heliumtanks 5 festgelegt. In der gleichen Weise ist auch der den Strahlungsschild 4 mit dem Stickstofftank 3 verbindende Zugstab 8 befestigt. Allerdings ist die Anschlußstelle 13, in der das obere Ende 18 des Zugstabs 8 festgelegt ist nicht direkt an der Stirnwand 19 des Stickstofftanks 3 befestigt, sondern an der Stirnwand 20, die mit ihrem äußeren Rand 21 an der Stirnwand 19 des Stickstofftanks 3 anliegt. Das untere Ende 22 des Zugstabs 8 ist in einem Lagerstück 23 festgelegt, das an einem inneren Mantelteil 24 des Schildes 4 befestigt ist.

Die Befestigung der Enden 14, 16, 18 und 22 der Zugstäbe 9 und 8 in den Anschlußstellen 13 bzw. im Lagerstück 23 erfolgt dadurch, daß die Enden der Zugstäbe 8 und 9 mit ein Außengewinde aufweisenden Zugankern 25 versehen sind, die in entsprechende Gewindebohrungen der Anschlußstellen 13 bzw. des Lagerstücks 23 eingeschraubt sind. Die Zugstäbe 8 und 9 können bei der Montage des Kryostaten 1 jeweils an der Innenseite des äußeren Bauteils befestigt werden, bevor das innere Bauteil in das äußere eingeführt wird, und schließlich kann die Befestigung an der Außenseite des inneren Bauteils durch eine Aussparung 26 bzw. 27 im äußeren Bauteil hindurch erfolgen. Diese Aussparungen 26 und 27 können bei Bedarf leicht verschlossen werden.

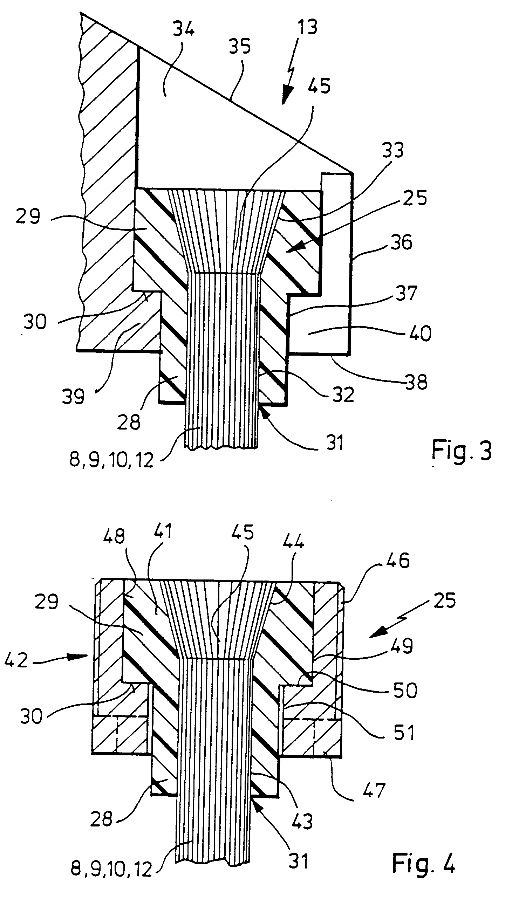

Die Fig.3 zeigt in vergrößerter Darstellung eine Ausführungsform einer Anschlußstelle 13 im Querschnitt, in die ein Zuganker 25 mit einem darin festgelegten Zugstab eingesetzt ist. Der Zuganker ist zylinderförmig ausgebildet und weist einen ersten zylinderförmigen Bereich 28 auf, der gegenüber dem zweiten zylinderförmigen Bereich 29 einen geringeren Durchmesser aufweist. Der Bereich 28 ist vom Bereich 29 über einen Absatz 30 getrennt. Weiterhin weist der Zuganker 25 eine insgesamt mit 31 bezeichnete Bohrung auf, die einen Zylinderförmigen Bereich 32 und einen sich daran anschließenden Bereich 33 umfaßt, der sich nach außen hin konisch erweitert. In diese Bohrung 31 ist das Ende einer der Zugstäbe 8, 9, 10 oder 12 eingesetzt, wobei in dem sich konisch erweiternden Bereich 33 das Ende des Zugstabs ebenfalls erweitert ist, worauf später noch näher eingegangen wird. Der Zuganker 25 selbst ist in eine Ausnehmung 34 der Anschlußstelle 13 eingesetzt, die in Richtung der Oberseite 35 und in Richtung einer ihrer vertikalen Seiten 36 offen ausgebildet ist, so daß der Zuganker 25 in die Ausnehmung 34 eingeführt werden kann, wobei schließlich der Bereich 28 des Zugankers 25 in einer Ausnehmung 37 zu liegen kommt, die im Boden 38 der Anschlußstelle 13 derart vorgesehen ist, daß Vorsprünge 39 und 40 den Bereich 29 des Zugankers 25 am Absatz 30 untergreifen. Die vertikale Seite 36 ist derart ausgebildet, daß sie den in der Ausnehmung 34 eingesetzten Zuganker 25 in Umfangsrichtung teilweise umschließt. Der Zuganker 25 liegt also sicher in der Ausnehmung 34, so daß Kräfte gezielt vom Zugstab über die Anschlußstelle 13 auf daran befestigte Bauteile eingeleitet werden können.

Bei dem in der Fig.4 gezeigten Zuganker 25 handelt es sich um eine weitere Ausführungsform, wobei nun der Zuganker 25 aus einer Innenhülse 41 und einer die Innenhülse 41 koaxial umgreifenden Außenhülse 42 besteht. Die Innenhülse 41 ist entsprechend dem in der Fig.3 dargestellten Zuganker 25 mit einem ersten zylindrischen Bereich 28 und einem sich über einen Absatz 30 daran anschließenden zweiten zylindrischen Bereich 29, der einen größeren Durchmesser als der Bereich 28 aufweist, ausgebildet. Ebenfalls weist die Innenhülse 41 eine zylindrische Bohrung 43 und eine sich daran anschließende, konisch erweiternde Bohrung 44 auf. In diese Bohrungen 43 und 44 ist das Ende 45 einer der Zugstäbe 8, 9, 10 oder 12 eingesetzt. Die die Innenhülse 41 umgebende Außenhülse 42 weist an ihrer Außenseite ein über einen Teil der axialen Länge sich erstreckendes Außengewinde 46 auf und ist mit einer Werkzeugangriffsfläche 47, z.B. einem Sechskant versehen, die sich über die restliche axiale Länge der Außenoberfläche der Außenhülse 42 an deren dem freien Ende 45 des Zugstabs abgewandten Seite erstreckt. Die Bohrung 48 der Außenhülse 42 ist derart ausgebildet, daß sie von einem Bereich 49 mit einem größeren Durchmesser über einen Absatz 50 zu einem Bereich 51 mit geringerem Durchmesser übergeht, wobei der Durchmesser des Bereichs 49 dem Durchmesser des Bereichs 29 der Innenhülse 41 entspricht, und der Bereich 28 der Innenhülse 41 mit Spiel im Bereich 51 liegt. Dabei liegen die Absätze 30 und 50 aneinander an. Vorteilhaft besteht die Außenhülse 42 aus Messing und ist die Innenhülse 41 aus einem Kunststoff, bevorzugt aus dem Kunststoff des Kunststoffzugstabes gebildet.

Wird nun der Zuganker 25 über ein an der Werkzeugangriffsfläche 47 angesetztes Werkzeug in eine Gewindebohrung einer Anschlußstelle 13 eingeschraubt, so kann die Lage des freien Endes 45 des Zugstabs bezüglich der Anschlußstelle 13 exakt durch die Einschraubtiefe eingestellt werden, wobei sich die Schraubbewegung aufgrund der zweiteiligen Ausführung des Zugankers nicht auf die Innenhülse 41 und somit auf den Zugstab überträgt.

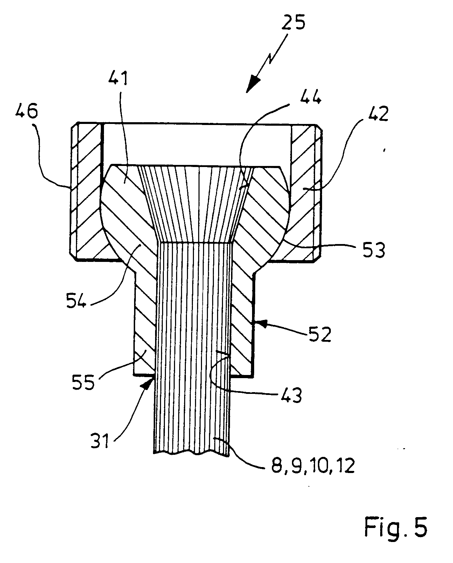

Der in Fig.5 gezeigte Zuganker 25 ist ebenfalls zweiteilig ausgeführt, wobei die Innenhülse 41 in Form eines aus Metall bestehenden Kugelbolzens 52 ausgebildet ist und die Außenhülse 42 eine Kugelpfanne 53 für die Kugel 54 des Kugelbolzens 52 darstellt. An die Kugel 54 schließt sich ein dem Bereich 28 entsprechender zylindrischer Fortsatz 55 an, der die zylindrische Bohrung 43 aufweist, wohingegen die Kugel 54 mit der sich konisch erweiternden Bohrung 44 versehen ist. Wird nun die Außenhülse 42 über ihr Außengewinde 46 in eine Gewindebohrung einer Anschlußstelle 13 eingeschraubt, so werden die Kräfte der Anschlußstelle ausschließlich axial in den Zugstab 8, 9, 10 oder 12 eingeleitet.

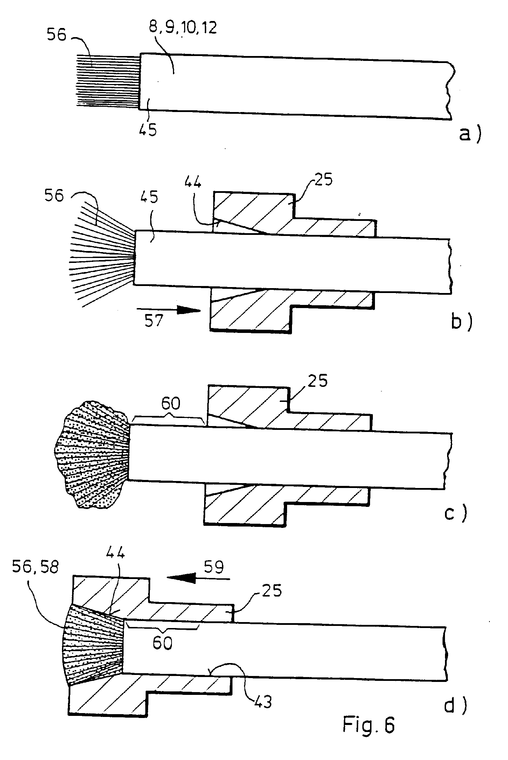

Nachfolgend wird anhand dem in den Figuren 6 a-d gezeigten schematischen Ablauf die Herstellung einer Verbindung eines Endes eines Zugstabs 8, 9, 10 oder 12 mit einem Zuganker 25 beschrieben. Das Ende 45 des Zugstabs wird so vorbereitet, daß das Harz von den direktionalen Glasfasern 56 gelöst und entfernt wird, so daß die Glasfasern 56 den Kunststoff des Zugstabs axial überragen. Anstelle des in der Fig.6 gezeigten mit direktionalen Glasfasern verstärkten Kunstsoffstabs können auch Kevlar-Kordeln verwendet werden, bei denen dieser Schritt der Lösung und Entfernung des Harzes entfällt. Gemäß der Fig.6b wird der Zuganker 25 derart in Richtung des Pfeiles 57 auf den Zugstab axial aufgeschoben, daß dessen sich konisch erweiternde Bohrung 44 in Richtung des freien Endes 45 des Zugstabes zeigt, und der Zuganker 25 zum Ende 45 beabstandet ist. Sodann werden die das Ende 45 überragenden Glasfasern 56 aufgefächert oder gespreizt. Die Glasfasern können zusätzlich noch gewellt, angeschmolzen oder dergleichen verformt werden. Nach dem Aufbringen eines Klebstoffes 58, vorzugsweise eines Epoxidklebstoffes, wie in der Fig.6c dargestellt, der die freien Enden der Glasfasern 56 vollständig umfließt und einhüllt, wird schließlich der Zuganker 25 in Richtung des Pfeiles 59 derart über die mit Klebstoff 58 benetzten Glasfasern 56 verschoben, daß diese aufgefächerten Enden der Glasfasern 56 in der konisch sich erweiternden Bohrung 44 zu liegen kommen. Zusätzlich kann über eine gewisse Wegstrecke 60 der Umfangsbereich des Zugstabs ebenfalls mit einem Klebstoff versehen worden sein, wobei diese Wegstrecke 60 schließlich in der zylindrischen Bohrung 43 des Zugankers 25 zu liegen kommt, wodurch eine zusätzliche Verbindung des Zugstabs mit dem Zuganker 25 geschaffen wird. Nach dem Aushärten des Klebstoffs 58 ist eine dauerhafte und hochbelastbare Verbindung zwischen dem Zugstab und dem Zuganker 25 geschaffen, da im Bereich der Wegstrecke 60 die Verbindung auf Scherung, und der Klebstoff 58 zwischen den Enden der Glasfasern 56 ebenfalls auf Scherung und zusätzlich auf Druck beansprucht wird, wodurch aufgrund einer Selbsthemmung ein Herausziehen der Glasfasern 56 aus dem Klebstoff 58 verhindert wird. Selbst bei einer beschädigten Verbindung können noch Kräfte über eine gewisse Wegstrecke aufgenommen werden, so daß die Festigkeit der Verbindung bei einer Beschädigung nicht plötzlich absinkt und dadurch unkontrollierbare Lageänderungen der im Kryostat 1 über die Zugstäbe 8, 9, 10 und 12 festgelegten Behälter auftritt.

## Patentansprüche

1. Kryostat, insbesondere für supraleitende Magnete, mit ineinandergeschachtelten Bauteilen, von den eines eine äußere Hülle und mindestens ein anderes ein in der Hülle angeordnetes Gefäß zur Aufnahme eines Kühlmittels bildet, und mit die Bauteile verbindenden Zugstäben, mit denen jeweils ein inneres Bauteil an dem benachbarten, weiter außen liegenden Bauteil aufgehängt ist, welche Zugstäbe als runde, mit Glasfasern oder Aramidfasern verstärkte Kunststoffstäbe ausgebildet sind, an ihren beiden Enden Zuganker aufweisen und über die Zuganker an dem jeweiligen Bauteil befestigt sind, wobei die Enden der Zugstäbe von Glasfasern oder Aramidfasern gebildet werden und die Enden in einer sich erweiternden Bohrung im Zuganker festgelegt sind, dadurch gekennzeichnet, daß die die Enden (45) der Zugstäbe bildenden Glasfasern oder Aramidfasern (56) an den Zugstabenden (45) enden und aufgefächert in der Bohrung (31) des Zugankers (25) festgelegt sind, wobei ein jedes Faserende mit einem Klebstoff (58) umgeben ist und daß die Bohrung (31) des Zugankers (25) über einen ersten Bereich (32) zylindrisch und über den restlichen Bereich (33) sich konisch erweiternd verläuft.

2. Kryostat nach Anspruch 1, dadurch gekennzeichnet, daß der Zuganker (25) mit einer sich stufenförmig erweiternden Bohrung versehen ist.

3. Kryostat nach einem oder mehreren der vorhergehenden Ansprüche, dadurch gekennzeichnet, daß der Zuganker (25) zylinderförmig ausgebildet ist, die Bohrung (31) koaxial verläuft und seine Außenseite mit einem Außengewinde (46) versehen ist.

4. Kryostat nach Anspruch 3, dadurch gekennzeichnet, daß die Außenseite des Zugankers (25) mit einer Werkzeugangriffsfläche (47) versehen ist.

5. Kryostat nach einem oder mehreren der vorhergehenden Ansprüche, dadurch gekennzeichnet, daß der Zuganker (25) eine den Zugstab umgebende Innenhülse (41) und eine die Innehülse umgebende und sich an dieser axial (Absätze 30 und 50) abstützende Außenhülse (42) aufweist.

6. Kryostat nach Anspruch 5, dadurch gekennzeichnet, daß die Innenhülse (41) an ihrem dem freien Ende (45) des Zugstabs zugewandten Ende einen radial sich erweiternden Absatz (30) und die Außenhülse (42) einen den Absatz (30) hintergreifenden, sich radial nach innen erstreckenden Vorsprung (39 und 40) aufweist.

7. Kryostat nach Anspruch 5 oder 6, dadurch gekennzeichnet, daß die Innenhülse (41) den gleichen Ausdehnungskoeffizienten wie der Zugstab aufweist.

8. Kryostat nach einem oder mehreren der Ansprüche 5 bis 7, dadurch gekennzeichnet, daß die Innenhülse (41) aus Kunststoff, insbesondere aus dem die Glasfasern oder Aramidfasern einbettenden Kunststoff des Zugstabes besteht.

9. Kryostat nach einem oder mehreren der Ansprüche 5 bis 8, dadurch gekennzeichnet, daß die Außenhülse (42) aus Metall, insbesondere Messing, besteht.

10. Kryostat nach einem oder mehreren der vorhergehenden Ansprüche, dadurch gekennzeichnet, daß der Klebstoff (58) ein Epoxidklebstoff ist.

11. Verfahren zur Herstellung eines Zugmittels für einen Kryostaten, insbesondere für supraleitende Magnete, mit ineinandergeschachtelten Bauteilen, von denen eines eine äußere Hülle und mindestens ein anderes ein in der Hülle angeordnetes Gefäß zur Aufnahme eines Kühlmittels bildet, und mit die Bauteile verbindenden Zugmitteln, mit denen jeweils ein inneres Bauteil an dem benachbarten, weiter außen liegenden Bauteil aufgehängt ist, welche Zugmittel als runde, mit Glasfasern oder Aramidfasern verstärkte Kunststoffstäbe ausgebildet sind, an ihren Enden Zuganker aufweisen und über die Zuganker an dem jeweiligen Bauteil befestigt sind, dadurch gekennzeichnet, daß die Glasfaser- oder Aramidfaserenden an den Enden der Zugstäbe von Kunststoff befreit werden, diese Glasfaser- oder Aramidfaserenden in die Bohrung des Zugankers so weit eingeführt werden, daß sie über dessen erweitertes Ende hinausragen, daß die Glasfaser- oder Aramidfaserenden aufgefächert und mit Klebstoff versehen, wieder in die Bohrung eingezogen und in dieser ausgehärtet werden.

12. Verfahren nach Anspruch 11, dadurch gekennzeichnet, daß die aufgefächerten Glasfaser- oder Aramidfaserenden texturiert, gestaucht oder dergleichen verformt werden.

## Claims

1. Cryostat in particular for superconducting magnets with nested construction parts, from which one forms an outer shell and at least one other a vessel arranged within the shell for receiving a coolant, and with tension rods connecting the construction parts, with which each inner construction part is suspended on the neighboring more outer lying construction part, the tension bars being round fiber glass or aramide fiber reinforced plastic bars and exhibiting, on both ends, tension anchors, and by means of the tension anchors are attached to the corresponding construction part, whereby the ends of the tension bars are formed from fiber glass or aramide fibers and the ends are secured in a widened bore in the tension anchor, characterized in that the fiber glass or aramide fibers (56) which form the ends (45) of the tension bars, terminate at the ends of the tension bars (45) and are fanned out and secured in the bore (31) of the tension anchor (25), whereby each fiber end is surrounded with glue (58) and the bore (31) of the tension anchor (25) is cylindrical in a first region (32) and conically widening over the remaining region (33).

2. Cryostat according to claim 1, characterized in that the tension anchor (25) is provided with a step-shaped widening bore.

3. Cryostat according to one or more of the previous claims, characterized in that the tension anchor (25) is cylindrically shaped, the bore (31) runs coaxially, and its outer side is provided with an outer thread (46).

4. Cryostat according to claim 3, characterized in that the outer side of the tension anchor (25) is provided with a tool engagement surface (47).

5. Cryostat according to one or more of the preceding claims, characterized in that the tension anchor (25) exhibits an inner bushing (41) which surrounds the tension bar and an outer bushing (42) which surrounds and is axially supported (offsets 30 and 50) by the inner bushing.

6. Cryostat according to claim 5, characterized in that the inner bushing (41) exhibits, on its free end (45) which faces the tension bar, a radially widening offset (30) and the outer bushing (42) exhibits a projection (39 and 40) which supports the offset (30) from below and extends radially inward.

7. Cryostat according to claim 5 or 6, characterized in that the inner bushing (41) exhibits the same expansion coefficient as the tension bar.

8. Cryostat according to one or more of the claims 5 to 7, characterized in that the inner bushing (41) is comprised of plastic, in particular from the plastic of the tension bar embedding the fiber glass or aramide fibers.

9. Cryostat according to one or more of the claims 5 through 8, characterized in that the outer bushing (42) is made from metal, in particular brass.

10. Cryostat according to one or more of the preceding claims, characterized in that the glue (58) is an epoxy glue.

11. Method for the production of a tension means for a cryostat, in particular for superconducting magnets with nested construction parts, of which one forms an outer shell and at least one other a vessel, arranged inside the shell, for receiving a coolant, and with tension means fastening the construction parts, by means of which each inner construction part is suspended from the neighboring outer lying construction part, the tension means being round and having fiber glass or aramide fiber reinforced plastic bars, and exhibiting at their ends tension anchors, and via the tension anchors are secured to the corresponding construction part, characterized in that the fiber glass or aramide fibers are freed from plastic at the ends of the tension bars, that these aramide or fiber glass ends are introduced sufficiently far into the bore of the tension anchor that they project out beyond its widened end, and that the fiber glass or aramide fibers, fanned out and provided with glue, are pulled back into the bore and are hardened therein.

12. Method according to claim 11, characterized in that the fanned-out fiber glass or aramide fiber ends are textured, buckled or similarly deformed.

## Revendications

1. Cryostat, notamment pour aimants supraconducteurs, comprenant des éléments emboîtés les uns dans les autres, dont l'un forme une enveloppe extérieure et au moins un autre un récipient disposé dans l'enveloppe et destiné à contenir un milieu réfrigérant, et des barres de traction reliant les éléments, avec lesquelles un élément intérieur est suspendu à l'élément voisin, situé plus à l'extérieur, lesquelles barres de traction sont constituées par des barres de matière plastique rondes renforcées de fibres de verre ou de fibres d'aramide, présentent des ancrages de traction à leurs deux extrémités, et sont fixées à l'élément respectif à l'aide des ancrages de traction, les extrémités des barres de traction étant formées de fibres de verre ou de fibres d'aramide et les extrémités étant bloquées dans un perçage agrandi de la barre de traction, caractérisé en ce que les fibres de verre ou fibres d'aramide (56) qui forment les extrémités (45) des barres de traction se terminent aux extrémités (45) des barres de traction et sont fixées avec une forme étalée dans le perçage (31) de l'ancrage de traction (25), chaque extrémité de fibre étant enrobée d'une colle (58), et en ce que le perçage (31) de l'ancrage de traction (25) est cylindrique sur une première région (32) et évasée avec une forme conique sur la région restante (33).

2. Cryostat selon la revendication 1, caractérisé en ce que l'ancrage de traction (25) est muni d'un perçage qui s'élargit en escalier.

3. Cryostat selon une ou plusieurs des revendications précédentes, caractérisé en ce que l'ancrage de traction (25) est de forme cylindrique, le perçage (31) s'étend coaxialement et sa surface extérieure est munie d'un filetage extérieur (46).

4. Cryostat selon la revendication 3, caractérisé en ce que la face extérieure de l'ancrage de traction (25) est munie d'une surface d'attaque (47) pour un outil.

5. Cryostat selon une ou plusieurs des revendications précédentes, caractérisé en ce que l'ancrage de traction (25) comprend une douille intérieure (41), et une douille extérieure (42) qui entoure la douille intérieure et prend appui axialement sur cette dernière (épaulements 30 et 50).

6. Cryostat selon la revendication 5, caractérisé en ce que la douille intérieure (41) présente, à son extrémité dirigée vers l'extrémité libre (45) de la barre de traction, une saillie (39 et 40) s'étendant radialement vers l'intérieur et qui s'engage derrière l'épaulement (30).

7. Cryostat selon la revendication 5 ou 6, caractérisé en ce que la douille intérieure (41) présente le même coefficient de dilatation que la barre de traction.

8. Cryostat selon une ou plusieurs des revendications 5 à 7, caractérisé en ce que la douille intérieure (41) est composée de matière plastique, notamment de la matière plastique de la barre de traction, qui enrobe les fibres de verre ou les fibres d'aramide.

9. Cryostat selon une ou plusieurs des revendications 5 à 8, caractérisé en ce que la douille extérieure (42) est composée de métal, notamment de laiton.

10. Cryostat selon une ou plusieurs des revendications précédentes, caractérisé en ce que la colle (58) est une colle époxyde.

11. Procédé de fabrication d'un moyen de traction pour un cryostat, notamment pour aimants supraconducteurs, comprenant des éléments emboîtés les uns dans les autres, dont l'un forme une enveloppe extérieure et au moins un autre un récipient disposé dans l'enveloppe et destiné à contenir un milieu réfrigérant, et des moyens de traction reliant les éléments, avec lesquels un élément intérieur est suspendu à l'élément voisin, situé plus à l'extérieur, lesquels moyens de traction sont constitués par des barres de matière plastique rondes renforcées de fibres de verre ou de fibres d'aramide, présentent des ancrages de traction à leurs deux extrémités, et sont fixés à l'élément respectif à l'aide des ancrages de traction, caractérisé en ce qu'on dégage les extrémités des fibres de verre ou d'aramide de la matière plastique aux extrémités des barres de traction, qu'on engage les extrémités des fibres de verre ou d'aramide dans le perçage de l'ancrage de traction, suffisamment loin pour qu'elles débordent au-delà de l'extrémité évasée de ce perçage, qu'on étale les extrémités des fibres de verre ou d'aramide et qu'on les munit d'une colle, puis qu'on les rentre dans le perçage et qu'on les durcit dans ce dernier.

12. Procédé selon la revendication 11, caractérisé en ce que les extrémités étalées des fibres de verre ou des fibres d'aramide sont texturées, écrasées ou déformées d'une autre façon.
